# EUROPEAN PATENT SPECIFICATION

(11) **EP 2 439 113 B1**
(45) Date of publication and mention of the grant of the patent: **05.06.2013**
(21) Application number: 10186747.1
(22) Date of filing: 06.10.2010
(51) Int. Cl.: B60R 21/36

(54) **Inflatable airbag for pedestrian impact**
Aufblasbarer Airbag für Fussgängeraufprall
Airbag gonflable pour choc piéton

(43) Date of publication of application: 11.04.2012
(73) Proprietor: Autoliv Development AB, 447 83 Vårgårda (SE)
(72) Inventor: Chaaya, Elias, 50343 Boras (SE); Johansson, Jack, 438 32 Landvetter (SE)
(74) Representative: Parry, Simon James

(56) References cited:
- EP-A1- 0 785 106
- EP-A1- 0 835 787
- EP-A1- 1 997 695
- DE-A1- 10 059 223
- US-A1- 2006 202 456
- US-A1- 2008 309 060

## Description

The present invention relates to an inflatable airbag. More particularly, the invention relates to an inflatable pedestrian airbag for a motor vehicle.

When a motor vehicle is involved in a frontal impact with a pedestrian, it is common for the body of the pedestrian to strike the windscreen of the vehicle which can result in serious injury to the pedestrian, and significant damage to the vehicle. In an attempt to alleviate this, it has been proposed to provide a motor vehicle with a so-called pedestrian airbag which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet, or beneath a cowl which is provided between the base of the windscreen and the rear part of the hood or bonnet. The rear of the hood or bonnet may be lifted, by a suitable air-bag, piston or other arrangement, to allow sufficient space for the pedestrian airbag to inflate so that it deploys in a manner effective to cover at least part of the windscreen and/or A-pillars of the vehicle, thereby cushioning the impact of a pedestrian with these parts of the vehicle.

Due to the relatively prolonged nature of a pedestrian impact accident, it is generally desirable to inflate such pedestrian airbags so that they remain inflated for a significant period of time after deployment. This is in contrast with a driver's airbag, for example, which is provided for inflation from within the hub of the vehicle's steering wheel to provide protection for the driver of the vehicle and which is typically configured to deflate as it is impacted by the driver's head and/or torso.

There is thus an advantage to providing a pedestrian airbag which is configured to be inflated upon the detection of a likely impact with a pedestrian, and which then remains substantially fully inflated after initial deployment in order to offer the best protection for a pedestrian. As will be appreciated, however, an airbag of this nature will make it very difficult, and indeed in many cases dangerous, for the driver of the vehicle to drive the vehicle after deployment of the airbag because by the very nature of the airbag and its manner of deployment, it will impede or block the driver's clear view through the windscreen. The present invention seeks to address this problem.

DE10059223A1 discloses a pedestrian airbag which is configured to define a plurality of view slots when inflated, through which the driver can see the road ahead.

US 2006/0 202 456 A shows a passenger airbag with a flexible patch covering a vent aperture.

It is therefore an object of the present invention to provide an improved inflatable pedestrian airbag.

According to the present invention, there is provided an inflatable pedestrian airbag for a motor vehicle, the airbag being formed of flexible material defining an inflatable chamber for the receipt of inflating gas and having a vent aperture provided with a closure arrangement, the closure arrangement having an initial closed configuration effective to substantially close the vent aperture and an alternate open configuration effective to open the vent aperture; wherein the closure arrangement is configured to remain in said closed configuration during inflation and substantially complete deployment of the airbag but to be selectively manipulable thereafter so as to adopt said open configuration and thereby permit deflation of the airbag, the closure arrangement comprising a flexible patch or flap arranged to cover and thereby close said vent aperture in said closed configuration, the patch or flap being larger than said vent aperture and being initially secured over said vent aperture on the outside of said inflatable chamber, the patch or flap being secured to the flexible material said airbag, around said vent aperture, by a peripheral line of stitching, said line of stitching being configured to remain substantially intact during inflation and substantially complete deployment of the airbag but to rupture as the patch or flap is subsequently peeled from the airbag, and wherein said line of stitching comprises an inner thread and an outer thread, and is configured such that only said inner thread is exposed to said inflating gas within said inflatable chamber during inflation of the airbag.

As will be appreciated, the closure arrangement is configured to remain in said closed configuration throughout deployment of the airbag and thus preferably withstands the force applied by the peak internal pressure of the inflating airbag.

Preferably, said closure arrangement is manually manipulable from said closed configuration to said open configuration.

Advantageously, said closure arrangement is mechanically manipulable from said closed configuration to said open configuration.

Conveniently, said closure arrangement is configured to permit said manual manipulation from outside the airbag.

Conveniently, said inner thread has a higher tensile strength and/or is thicker than said outer thread, the outer thread being configured to break as the patch or flap is peeled from the airbag.

Advantageously, said inner thread is heat resistant. The inner thread may thus be selected to sustain the high temperatures typically created by airbag inflating gas.

Preferably, said patch or flap is provided with a finger tab and/or a gripping aperture to facilitate convenient gripping of the patch or tab for said manual manipulation from said closed configuration to said open configuration.

Advantageously, the airbag further comprises a reinforcing patch provided around the vent aperture on the inside of the inflatable chamber.

Conveniently, said reinforcing patch is secured to the flexible material of the airbag by said line of stitching.

Preferably, said vent aperture takes the form of an elongate slot formed through the flexible material of the airbag.

So that the invention may be more readily understood, and so that further features thereof may be appreciated, embodiments of the invention will now be described by way of example with reference to the accompanying drawings in which:
Figure 1 is a plan view showing two layers of fabric material used to form an airbag in accordance with the present invention;
Figure 2 is a plan view showing one of the layers provided with a vent closure arrangement;
Figure 3 is a schematic illustration showing the airbag in the inflated, deployed condition with the closure arrangement in an initial closed configuration;
Figure 4 is a view corresponding generally to that of figure 3 but which shows the closure arrangement having been manually opened;
Figure 5 is a schematic cross-sectional view taken along line A-A in figure 2;
Figure 6 is a schematic cross-sectional view showing one type of stitching which may be used in the airbag of the invention;
Figure 7 is a schematic cross-sectional view showing an alternative type of stitching which may be used in the airbag of the invention; and
Figure 8 is a view corresponding generally to that of figure 3, showing a deployed airbag having a slightly modified closure arrangement.

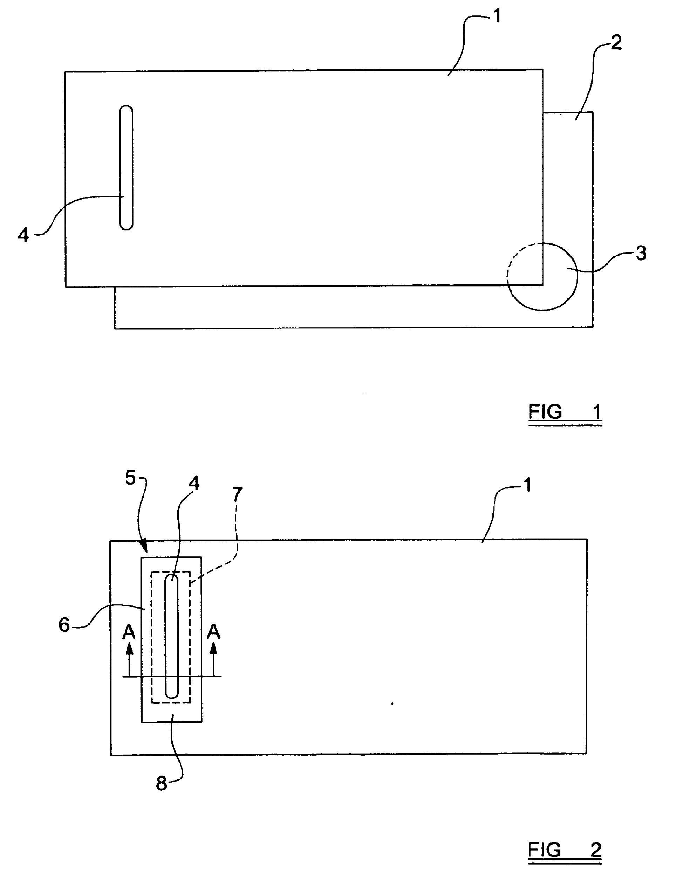

Turning firstly to consider figure 1 of the accompanying drawings, there are illustrated two sheets 1, 2 of flexible material, most preferably fabric, from which a pedestrian airbag can be made. The two sheets 1, 2 are shown in figure 1 as being rectangular in form, but it is to be appreciated that the sheets can take any convenient shape or form. In order to form the airbag the sheets 1, 2 are superimposed and stitched together around their peripheral edges to define an inflatable chamber for the receipt of inflating gas from a gas generator in a generally conventional manner. As will be appreciated, this represents a very simple known method to form a basic airbag and it is important to note that the invention is not in any way restricted to airbags constructed in this manner. Indeed, airbags in accordance with the present invention can be constructed in any convenient manner. For example, the airbag can be formed via a so-called "one-piece weaving" process in which the two layers of fabric are woven simultaneously and in which the warp and weft yarns of each layer are interwoven in selected areas to create a peripheral seam.

As can be seen in figure 1, the rear sheet 2 is provided with a gas inlet aperture 3 through which a flow of inflating gas will be directed when the airbag is inflated, for example from an associated gas generator (not shown). The top or front sheet 1 is provided with a vent aperture 4, which in the embodiment illustrated takes the form of an elongate slot which is cut or otherwise formed in the fabric of the sheet 1. In the particular arrangement illustrated, it will be noted that the vent aperture 4 is arranged so as to be located in spaced relation to the gas inlet aperture when the two sheets 1, 2 are connected to form the airbag.

Figure 2 illustrates the front sheet 1 of the airbag in further detail, and shows a closure arrangement 5 which is provided in association with the vent aperture 4. The closure arrangement 5 illustrated comprises an elongate and generally rectangular flap or patch 6 of flexible material. The patch 6 is most preferably formed from similar fabric as the sheet 1 of the airbag. The patch 6 is shown in figure 2 in a position which is effective to cover and hence close the vent aperture 4. More particularly, it will be noted that the patch 6 is sized so as to be larger than the vent aperture 4 and is laid over the aperture 4 such that its peripheral regions lie against the front surface of the sheet 1 around the vent aperture 4. The patch 6 is secured to the sheet 1 in this position by a line of stitching 7 which runs around the outside of the vent aperture 4 and which serves to interconnect the fabric of the sheet 1 and the patch 6 in a generally peripheral region of the patch 6. It will be noted, however, that the line of stitching is spaced inwardly of the edge of the patch at one end such that a small tab 8 is defined at one end of the patch 6, the tab lying generally loosely against the front sheet 1 of the airbag.

The line of stitching 7 is configured so that it will remain substantially intact during inflation and substantially complete deployment of the airbag. However the stitching is also configured so as to be relatively weak in peel so that the patch 6 can be easily peeled off from the front surface of the sheet 1. The stitching is thus tuned to be relatively strong in shear but relatively weak in peel as will be described in more detail below.

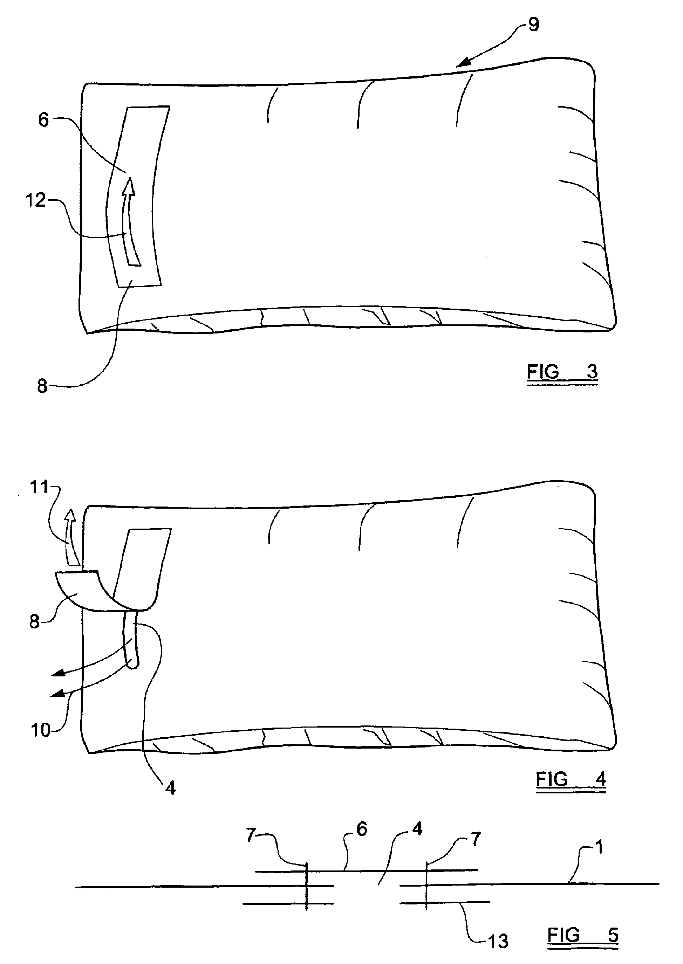

Figure 2 thus illustrates the patch 6 of the closure arrangement 5 in an initial closed configuration in which it is effective to substantially close the vent aperture 4 and prevent the leakage (or at least to prevent significant leakage) of inflating gas through the vent aperture 4 as the airbag is inflated and deployed in an accident situation. Figure 3 illustrates an inflated airbag 9 in the deployed condition following the injection of inflating gas into the inflatable chamber through the gas inlet aperture.

The airbag 9 is intended to remain in this generally inflated condition (covering the windscreen and/or A-pillar of the vehicle) for some time following deployment in order to provide effective protection to any pedestrians who may be struck by the motor vehicle. However, the deployed condition of the airbag will restrict the driver's view through the windscreen of the motor vehicle. It is therefore desirable to deflate the airbag 9 so that the vehicle can be driven onward without the driver's view through the windscreen being impeded. In order to permit this deflation, the patch 6 may be conveniently pulled so that it peels away from the front sheet 1 of the airbag in order to expose and hence open the vent aperture 4, thereby permitting the flow 10 of inflating gas from inside the airbag through the vent aperture 4. The tab 8 provides a convenient gripping portion by which the driver or another person may grip the patch 6 and pull it away from the front surface of the inflated airbag with a peeling action, as illustrated schematically by arrow 11 in figure 4.

As will thus be appreciated, the patch 6 of the closure arrangement 5 may thus be manually manipulable from its initial closed configuration illustrated in figures 2 and 3, to its open configuration illustrated in figure 4, thereby opening up the vent aperture 4 and allowing deflation of the airbag so that it may be packed away for the vehicle to be driven in a so-called "limp-home" mode without the driver's visibility through the windscreen being dangerously restricted.

The patch 6 may be printed on its outermost surface with an arrow 12 or other indicia (such as, for example, the words "PULL TAB HERE TO DEFLATE" or the like) in order to indicate the manner in which it should be peeled from the sheet 1 to open the vent aperture 4.

The invention provides a convenient means by which the driver of the motor vehicle (or indeed any other person such as a member of the emergency services) may open the vent aperture 4 after deployment in order to permit the escape of inflating gas from inside the airbag, thereby deflating the airbag and permitting it to be packed away or otherwise secured, even if only in a temporary manner, to permit the vehicle to be safely driven onward.

Figure 5 shows a transverse cross-section taken through the vent aperture 4 along line A-A. The line of stitching on either side of the vent aperture 4 is shown schematically. An optional internal reinforcing patch 13 is provided around the vent aperture 4. The reinforcing patch 13 is secured against the inner surface of the fabric sheet 1 and has a central opening which is aligned with the vent aperture 4. The reinforcing patch may be secured in position with the same stitching 7 (as shown) which serves to interconnect the closure patch 6 and the sheet 1. The reinforcing patch serves to protect the edge of the fabric sheet 1 around the vent aperture 4 and also to improve the resistance of the closure to gas leakage during inflation of the airbag. As will be appreciated, the location of the vent aperture 4 in spaced relation to the gas inlet aperture 3 also serves to prevent the very aggressive inflow of inflating gas from impinging directly on the vent aperture 4 and its associated closure arrangement 5.

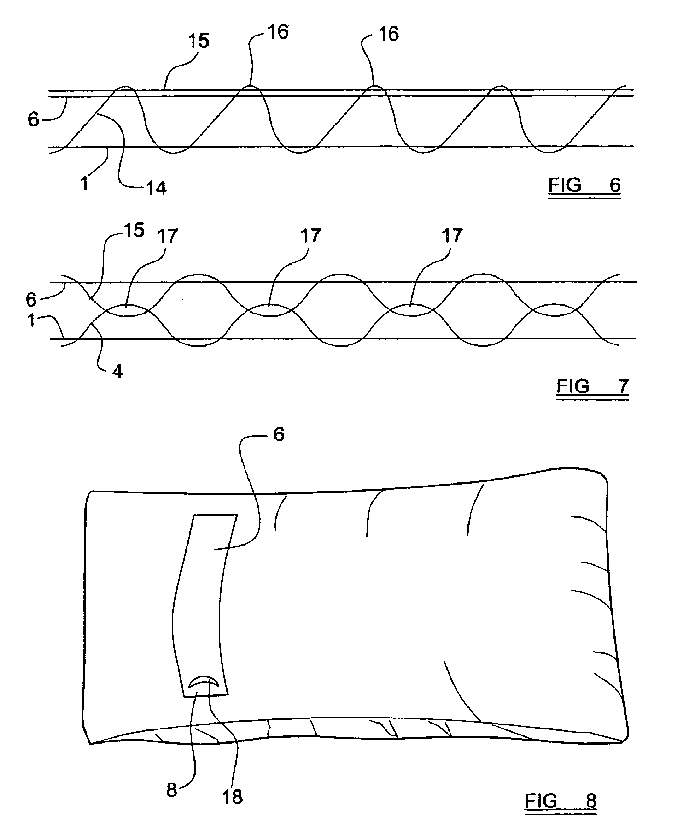

Figure 6 shows a preferred configuration of stitch which may be used for the line of stitching 7 interconnecting the closure patch 6 and the fabric sheet 1 of the airbag. In particular, it is to be noted that the stitching actually comprises two different types of thread, namely an inner thread 14 and an outer thread 15. The inner thread 14 is stronger than the outer thread and is preferably thicker than the outer thread. The inner thread is sewn through the fabric sheet 1 of the airbag and the fabric closure patch 6 in a series of successive loops 16 and will thus be exposed the inflating gas directed into the inflatable chamber of the airbag. The inner thread 14 is thus preferably heat resistant and is selected so as to be able to sustain the high temperatures typically created by airbag inflating gas. However, the outer thread 15 is not exposed to the inflating gas and instead runs generally along the outside of the closure patch 6, and through the successive loops formed in the inner thread 14, thereby effectively serving as a locking thread. The outer thread 15 therefore is therefore not required to be as resistant to heat as the inner thread 14, which means that the outer thread 15 can be weaker than the inner thread. The combination of the relatively strong inner thread 14 and the relatively weak outer thread 15 provides stitching which is relatively strong in shear and relatively week in peel, thereby ensuring that the closure patch 6 remains in its closed configuration during inflation and deployment of the airbag, but also ensuring that the patch can subsequently be easily peeled open. It is envisaged that the inner thread will be of M20 yarn, and the outer thread will be of M60 yarn.

Figure 7 illustrates an alternative configuration of stitch, which again comprises a relatively strong inner thread 14 and a relatively weak outer thread 15. In this arrangement, the inner thread 15 is stitched through only the fabric sheet 1 of the airbag in a series of loops, whilst the outer thread 15 is similarly stitched through only the fabric closure patch 6. However, the two threads 14, 15 are looped around each other at positions 17 located between the fabric sheet 1 and the closure patch 6. This configuration of stitch is thus also arranged such that only the relatively strong thread 14 is exposed to the high temperature inflating gas inside the airbag. As the closure patch 6 is subsequently peeled from the airbag, the relatively weak outer thread 15 will easily rupture.

Figure 8 illustrates a modified form of the closure patch 6 in which the end tab 8 is provided with a gripping aperture 18. In the illustrated arrangement the gripping aperture has a generally arcuate form and is sized to easily accommodate the fingers of a 90 percentile male, thereby providing a convenient means by which a person may grip the tab 8 in order to peel the closure flap 6 open.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. An inflatable pedestrian airbag (9) for a motor vehicle, the airbag being formed of flexible material defining an inflatable chamber for the receipt of inflating gas and having a vent (4) aperture provided with a closure arrangement (5), the closure arrangement (5) having an initial closed configuration effective to substantially close the vent aperture (4) and an alternate open configuration effective to open the vent aperture (4); **characterised in that** said closure arrangement (5) is configured to remain in said closed configuration during inflation and substantially complete deployment of the airbag but to be selectively manipulable thereafter so as to adopt said open configuration and thereby permit deflation of the airbag, the closure arrangement (5) comprising a flexible patch (6) or flap arranged to cover and thereby close said vent aperture (4) in said closed configuration, the patch (6) or flap being larger than said vent aperture (4) and being initially secured over said vent aperture (4) on the outside of said inflatable chamber around said vent aperture (4), by a peripheral line of stitching (7), said line of stitching (7) being configured to remain substantially intact during inflation and substantially complete deployment of the airbag (9) but to rupture as the patch (6) or flap is subsequently peeled from the airbag (9), and wherein said line of stitching comprises an inner thread (14) and an outer thread (15), and is configured such that only said inner thread (14) is exposed to said inflating gas within said inflatable chamber during inflation of the airbag (9).

2. An airbag according to claim 1, wherein said closure arrangement (5) is manually manipulable from said closed configuration to said open configuration.

3. An airbag according to claim 1, wherein said closure arrangement (5) is mechanically manipulable from said closed configuration to said open configuration.

4. An airbag according to claim 2, wherein said closure arrangement (5) is configured to permit said manual manipulation from outside the airbag (9).

5. An airbag according to any preceding claim, wherein said inner thread (14) has a higher tensile strength and/or is thicker than said outer thread (15), the outer thread (15) being configured to break as the patch (6) or flap is peeled from the airbag (9).

6. An airbag according to claim 5, wherein said inner thread (14) is heat resistant.

7. An airbag according to any preceding claim, wherein said patch (6) or flap is provided with a finger tab (8) and/or a gripping aperture (18) to facilitate convenient gripping of the patch (6) or tab for said manual manipulation from said closed configuration to said open configuration.

8. An airbag according to any preceding claim, wherein further comprising a reinforcing patch (13) provided around the vent aperture (4) on the inside of the inflatable chamber.

9. An airbag according to claim 8, wherein said reinforcing patch (13) is secured to the flexible material of the airbag by said line of stitching (7).

10. An airbag according to any preceding claim, wherein said vent aperture (4) takes the form of an elongate slot formed through the flexible material of the airbag (9).

## Patentansprüche

1. Aufblasbarer Fußgängerairbag (9) für ein Kraftfahrzeug, wobei der Airbag aus flexiblem Material gebildet ist, das eine aufblasbare Kammer zum Aufnehmen von Füllgas definiert, und eine Abströmöffnung (4) aufweist, die mit einer Verschlussanordnung (5) versehen ist, wobei die Verschlussanordnung (5) eine anfangs geschlossene Gestaltung aufweist, in der wirksam die Abströmöffnung (4) im Wesentlichen verschlossen ist, und eine alternative offene Gestaltung, in der wirksam die Abströmöffnung (4) geöffnet ist; **dadurch gekennzeichnet, dass** die Verschlussanordnung (5) so eingerichtet ist, dass sie während des Aufblasens und im Wesentlichen der gesamten Auslösung des Airbags in der geschlossenen Gestaltung bleibt, dass sie jedoch danach gezielt bedienbar ist, um die offene Gestaltung anzunehmen und dadurch die Entleerung des Airbags zu ermöglichen, wobei die Verschlussanordnung (5) ein flexibles aufgesetztes Teil (6) oder eine flexible Klappe umfasst, das bzw. die so angeordnet ist, dass es bzw. sie die Abströmöffnung (4) in der geschlossenen Gestaltung bedeckt und dadurch verschließt, wobei das aufgesetzte Teil (6) oder die Klappe größer ist als die Abströmöffnung (4) und anfangs über der Abströmöffnung (4) an der Außenseite der aufblasbaren Kammer um die Abströmöffnung (4) herum durch eine umlaufende Nahtlinie (7) befestigt ist, wobei die Nahtlinie (7) so eingerichtet ist, dass sie während des Aufblasens und im Wesentlichen der gesamten Auslösung des Airbags (9) im Wesentlichen ganz bleibt, jedoch reißt, wenn das aufgesetzte Teil (6) oder die Klappe anschließend von dem Airbag (9) abgelöst wird, und wobei die Nahtlinie einen inneren Faden (14) und einen äußeren Faden (15) umfasst und so eingerichtet ist, dass nur der innere Faden (14) während des Aufblasens des Airbags (9) mit dem Füllgas innerhalb der aufblasbaren Kammer in Berührung kommt.

2. Airbag nach Anspruch 1, wobei die Verschlussanordnung (5) per Hand bedienbar ist, um aus der geschlossenen Gestaltung in die offene Gestaltung zu gelangen.

3. Airbag nach Anspruch 1, wobei die Verschlussanordnung (5) mechanisch bedienbar ist, um aus der geschlossenen Gestaltung in die offene Gestaltung zu gelangen.

4. Airbag nach Anspruch 2, wobei die Verschlussanordnung (5) so eingerichtet ist, dass die Bedienung per Hand von außerhalb des Airbags (9) erfolgen kann.

5. Airbag nach einem vorhergehenden Anspruch, wobei der innere Faden (14) eine höhere Zugfestigkeit aufweist und/oder dicker als der äußere Faden (15) ist, wobei der äußere Faden (15) so eingerichtet ist, dass er reißt, wenn das aufgesetzte Teil (6) oder die Klappe von dem Airbag (9) abgelöst wird.

6. Airbag nach Anspruch 5, wobei der innere Faden (14) hitzebeständig ist.

7. Airbag nach einem vorhergehenden Anspruch, wobei das aufgesetzte Teil (6) oder die Klappe mit einer Fingerlasche (8) und/oder einer Greiföffnung (18) versehen ist, um das bequeme Greifen des aufgesetzten Teils (6) oder der Lasche für die Bedienung per Hand aus der geschlossenen Gestaltung in die offene Gestaltung zu vereinfachen.

8. Airbag nach einem vorhergehenden Anspruch, ferner umfassend ein aufgesetztes Verstärkungsteil (13), das um die Abströmöffnung (4) herum an der Innenseite der aufblasbaren Kammer vorgesehen ist.

9. Airbag nach Anspruch 8, wobei das aufgesetzte Verstärkungsteil (13) an dem flexiblen Material des Airbags mit der Nahtlinie (7) befestigt ist.

10. Airbag nach einem vorhergehenden Anspruch, wobei die Abströmöffnung (4) die Form eines länglichen Schlitzes aufweist, der durch das flexible Material des Airbags (9) hindurch ausgebildet ist.

## Revendications

1. Airbag gonflable pour piéton (9) pour un véhicule à moteur, l'airbag étant formé en matériau souple définissant une chambre gonflable pour la réception de gaz de gonflage et présentant une ouverture d'évent (4) pourvue d'un ensemble de fermeture (5), l'ensemble de fermeture (5) présentant une configuration fermée initiale efficace pour fermer essentiellement l'ouverture d'évent (4) et une configuration ouverte alternative efficace pour ouvrir l'ouverture d'évent (4) ; **caractérisé en ce que** ledit ensemble de fermeture (5) est configuré pour rester dans ladite configuration fermée pendant le gonflage et le déploiement essentiellement complet de l'airbag mais pour être manipulable de manière sélective après cela de façon à adopter ladite configuration ouverte et permettre ainsi le dégonflage de l'airbag, l'ensemble de fermeture (5) comprenant une pièce rapportée (6) ou patte souple disposée pour recouvrir et ainsi fermer ladite ouverture d'évent (4) dans ladite configuration fermée, la pièce rapportée (6) ou patte étant plus grande que ladite ouverture d'évent (4) et étant initialement fixée par-dessus ladite ouverture d'évent (4) à l'extérieur de ladite chambre gonflable autour de ladite ouverture d'évent (4), par une ligne périphérique de piqûre (7), ladite ligne de piqûre (7) étant configurée pour rester essentiellement intacte pendant le gonflage et le déploiement essentiellement complet de l'airbag (9) mais pour rompre lorsque la pièce rapportée (6) ou patte est détachée ultérieurement de l'airbag (9), et dans lequel ladite ligne de piqûre comprend un fil intérieur (14) et un fil extérieur (15), et est configurée de sorte qu'uniquement ledit fil intérieur (14) est exposé audit gaz de gonflage à l'intérieur de ladite chambre gonflable pendant le gonflage de l'airbag (9).

2. Airbag selon la revendication 1, dans lequel ledit ensemble de fermeture (5) est manipulable manuellement de ladite configuration fermée à ladite configuration ouverte.

3. Airbag selon la revendication 1, dans lequel ledit ensemble de fermeture (5) est manipulable mécaniquement de ladite configuration fermée à ladite configuration ouverte.

4. Airbag selon la revendication 2, dans lequel ledit ensemble de fermeture (5) est configuré pour permettre ladite manipulation manuelle depuis l'extérieur de l'airbag (9).

5. Airbag selon une quelconque revendication précédente, dans lequel ledit fil intérieur (14) présente une résistance à la rupture supérieure et/ou est plus épais que ledit fil extérieur (15), le fil extérieur (15) étant configuré pour rompre lorsque la pièce rapportée (6) ou la patte est détachée de l'airbag (9).

6. Airbag selon la revendication 5, dans lequel ledit fil intérieur (14) est résistant à la chaleur.

7. Airbag selon une quelconque revendication précédente, dans lequel ladite pièce rapportée (6) ou patte est pourvue d'une languette à doigt (8) et/ou une ouverture de saisie (18) pour faciliter la saisie pratique de la pièce rapportée (6) ou languette pour ladite manipulation manuelle de ladite configuration fermée à ladite configuration ouverte.

8. Airbag selon une quelconque revendication précédente, comprenant en outre une pièce rapportée de renforcement (13) prévue autour de l'ouverture d'évent (4) sur l'intérieur de la chambre gonflable.

9. Airbag selon la revendication 8, dans lequel ladite pièce rapportée de renforcement (13) est fixée au matériau souple de l'airbag par ladite ligne de piqûre (7).

10. Airbag selon une quelconque revendication précédente, dans lequel ladite ouverture d'évent (4) prend la forme d'une fente allongée formée à travers le matériau souple de l'airbag (9).
